(19) Europäisches Patentamt
European Patent Office
Office européen des brevets

(11) **EP 2 652 069 B1**

(12) **FASCICULE DE BREVET EUROPEEN**

(45) Date de publication et mention
de la délivrance du brevet:
**13.11.2019 Bulletin 2019/46**

(51) Int Cl.:
**C09K 8/58** *(2006.01)*   **G01N 11/00** *(2006.01)*

(21) Numéro de dépôt: **11808889.7**

(86) Numéro de dépôt international:
**PCT/FR2011/000641**

(22) Date de dépôt: **07.12.2011**

(87) Numéro de publication internationale:
**WO 2012/080593 (21.06.2012 Gazette 2012/25)**

(54) **PROCÉDÉ POUR DÉTERMINER UNE QUANTITÉ D'AGENT ALCALIN À INJECTER DANS LE CADRE DE RÉCUPÉRATION ASSISTÉE D'HYDROCARBURES**

VERFAHREN ZUR BESTIMMUNG DER MENGE EINES DIE STRUKTUR EINER ASSISTIERTEN GEWINNUNG VON KOHLENWASSERSTOFFEN EINZUSPRITZENDEN ALKALIMITTELS

METHOD FOR DETERMINING A QUANTITY OF AN ALKALINE AGENT TO BE INJECTED IN THE FRAMEWORK OF THE ASSISTED RECOVERY OF HYDROCARBONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2010 FR 1004948**

(43) Date de publication de la demande:
**23.10.2013 Bulletin 2013/43**

(73) Titulaire: **IFP Energies nouvelles
92500 Rueil-Malmaison (FR)**

(72) Inventeurs:
• **ROUSSEAU, David**
**F-92000 Nanterre (FR)**
• **BAZIN, Brigitte**
**F-75017 Paris (FR)**

(74) Mandataire: **IFP Energies nouvelles
Département Propriété Industrielle
Rond Point de l'échangeur de Solaize
BP3
69360 Solaize (FR)**

(56) Documents cités:
EP-A1- 2 072 752      FR-A1- 3 008 988
US-A- 3 871 452       US-A- 3 977 470
US-A1- 2005 199 395

• ZHENG C G ET AL: "Effects of Polymer Adsorption and Flow Behavior on Two-Phase Flow in Porous Media", SPE RESERVOIR EVALUATION AND ENGINEERING, SOCIETY OF PETROLEUM ENGINEERS, INC, US, vol. 3, no. 64270, 1 juin 2000 (2000-06-01), pages 216-223, XP002508270, ISSN: 1094-6470
• BAZIN B ET AL: "Ion Exchange and Dissolution/ Precipitation Modeling: Application to the Injection of Aqueous Fluids Into a Reservoir Sandstone", SPE RESERVOIR ENGINEERING, SOCIETY OF PETROLEUM ENGINEERS, vol. 6, no. 2, 1 mai 1991 (1991-05-01), pages 233-238, XP002640499,
• SCHNEIDER F N ET AL: "Steady-State Measurements of Relative Permeability for Polymer/Oil Systems", SOCIETY OF PETROLEUM ENGINEERS JOURNAL, DALLAS, TX, US, 1 février 1982 (1982-02-01), pages 79-86, XP002508269, ISSN: 0197-7520

## Description

Le domaine de la présente invention concerne la récupération assistée d'hydrocarbures dans des roches réservoirs, selon des techniques de balayage du milieu par des solutions aqueuses comportant des produits chimiques.

En particulier, l'invention permet de déterminer les quantités d'agent alcalin à injecter dans un réservoir pour limiter la rétention d'un tensio-actif dans les opérations de récupération améliorée du pétrole par procédés AS ("Alcalin Surfactant") ou ASP ("Alcalin Surfactant Polymer").

La récupération de l'huile des champs pétroliers requiert souvent l'injection d'un fluide déplaçant, le plus souvent de l'eau, pour maintenir la pression du gisement afin de permettre la production, par déplacement de l'huile en place, de puits injecteurs vers des puits producteurs disposés suivant un schéma préalablement optimisé pour le champ considéré.

Dans le cas de l'injection d'eau, ce fluide déplaçant peut être injecté seul ou au contraire, renfermer des agents chimiques destinés à améliorer le balayage de l'huile en place.

Parmi ces agents chimiques, d'une part, les agents tensio-actifs visent à réduire le piégeage de l'huile dans les pores de la roche par réduction de la tension interfaciale eau-huile et modification éventuelle de la mouillabilité de la roche. D'autre part, les polymères confèrent à l'eau une plus grande viscosité augmentant son efficacité de balayage de la phase hydrocarbure.

Cependant, ces deux catégories de produits améliorants subissent des pertes dans le réservoir, en raison de multiples phénomènes, parmi lesquels la rétention ou adsorption des produits sur la roche, qui peut être élevée et évidemment préjudiciable à l'intérêt économique de ces procédés de récupération. La présence de cations divalents en place dans l'eau de gisement et sur les minéraux de la roche (notamment argiles) favorise encore ces pertes.

La méthode la plus fréquemment employée pour réduire l'adsorption du tensio-actif ou du polymère est l'injection d'un additif alcalin, c'est-à-dire d'une base, telle que le carbonate de sodium ou la soude. On peut en effet montrer que l'adsorption du tensio-actif est très largement diminuée en pH basique. Cet effet est provoqué par l'augmentation en valeur absolue de la charge de surface (négative) de la roche provoquée par l'adsorption des ions OH-. Le pH basique est assuré par l'injection de l'agent alcalin. Pour profiter de cet effet dans le procédé d'injection de tensio-actif, il faut être capable de calculer le pH du bouchon d'additifs chimiques injecté dans le réservoir pour limiter l'adsorption du tensio-actif.

Ces agents de conditionnement de la roche (agent alcalin), dissous sous diverses formes chimiques dissociées ou non en ions, font intervenir de multiples équilibres chimiques en phase aqueuse:

- des réactions de précipitation de sels (sels de cations divalents en place notamment),

- de multiples interactions avec la roche (échanges d'ions et adsorption avec modification des charges de la surface solide),

- éventuellement aussi des réactions avec certains constituants de l'huile en place (formation de savons avec l'agent tensio-actif). A elle seule, l'injection d'agent de conditionnement peut même déjà améliorer la récupération d'huile par rapport à l'injection d'eau conventionnelle dépourvue de tout agent chimique.

Tous ces phénomènes physico-chimiques doivent être pris en compte pour déterminer les volumes et concentrations des produits à injecter, et les modalités d'injection (débits, distribution sur le champ via le schéma d'injection,...), tant pour la phase de conditionnement de la roche-réservoir (injection d'agents alcalins de conditionnement) que pour celle des bouchons d'eau améliorée (par tensio-actifs et/ou polymères) qui suivent, destinés à améliorer la récupération et l'efficacité de déplacement.

Ce dimensionnement des solutions injectées est essentiel car il détermine la faisabilité et rentabilité de ces procédés via :

(a) la taille et le coût des installations : installations de surface pour préparer les solutions, (tensio-actifs, polymères); nombre, disposition et équipements de pompage des puits;

(b) les masses de produits de conditionnement et améliorants requises (volumes et concentrations), donc leur coût;

(c) et bien sûr, l'efficacité en termes de récupération d'huile.

La composition de la formulation chimique (solution aqueuse d'additifs chimiques comprenant des tensio-actifs, des agents alcalins et du polymère) est déterminée par des expériences au laboratoire et par un calcul numérique pour l'extrapolation à la taille du réservoir.

Les expériences de laboratoire consistent à injecter une formulation d'additifs chimiques dans une carotte du réservoir préalablement préparée, pour représenter l'état de saturation en huile du réservoir avant le démarrage des opérations de récupération améliorée. Au cours de l'injection de la formulation d'additifs chimiques dans la carotte, on récupère de l'huile. La quantité d'huile récupérée dépend de la nature et de la concentration des additifs dans la formulation et du volume de solution injecté.

La modélisation numérique permet d'optimiser la mise en œuvre du procédé et d'extrapoler les expériences de l'échelle du laboratoire à l'échelle du réservoir. L'outil de modélisation est un outil qui permet de rendre compte des écoulements en milieu poreux à différentes échelles. Un exemple d'outil de modélisation est le modèle Puma Flow (IFP Energies nouvelles, France), qui est un outil de modélisation numérique utilisé en ingénierie de réservoir. Dans les modèles de réservoir, l'écoulement est diphasique (eau/huile). Les équations de l'huile et de l'eau sont de type "black oil". Il faut ajouter à ces équations "black oil" des équations de transport de chaque espèce chimique dans la phase eau. Le transport est modélisé par l'équation de conservation des espèces chimiques dans la phase eau. On calcule le pH de la solution à partir d'une relation entre la concentration de l'agent alcalin et la concentration de OH-. L'agent alcalin est soit directement de la soude, soit une base permettant d'obtenir un effet tampon. Selon l'invention telle que revendiquée, l'agent alcalin est une base permettant d'obtenir un effet tampon.

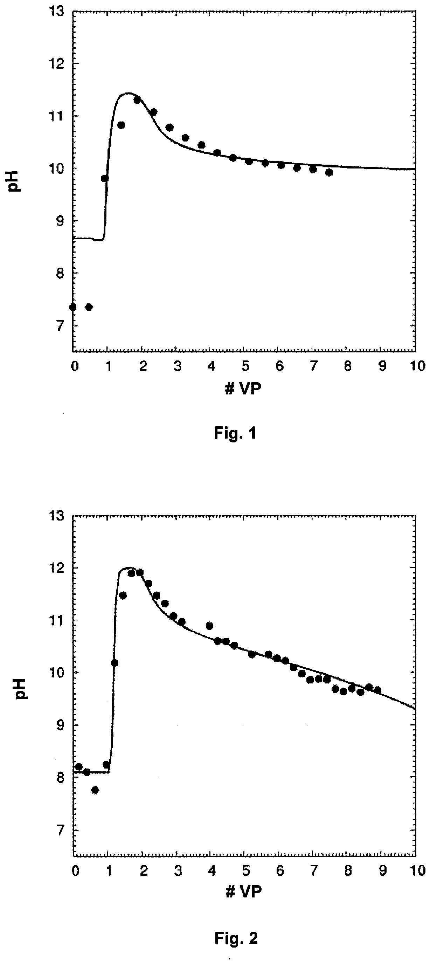

Dans le cas d'un agent alcalin tampon, il faut associer des relations d'équilibre aux équations précédentes pour calculer la concentration de OH- et ensuite le pH à partir de la concentration de l'agent alcalin tampon. Cette méthode est décrite dans les références suivantes: Pope et al. SPE 110212 (réaction 5 pour le carbonate) et Pope et al. SPE 116754 (relation 3 et 4 pour le métaborate). Le modèle pour un agent alcalin tampon donne des résultats satisfaisants quand on les compare à des résultats expérimentaux-type, comme on le voit sur la figure 1, qui illustre l'évolution du pH en fonction en volume de pore (VP) injecté. Les points représentent les mesures expérimentale, la courbe représente le modèle "agent alcalin tampon".

Cependant, la prise en compte des relations d'équilibre alourdit les temps de calcul. Il faut aussi connaître toutes les grandeurs thermodynamiques associées aux équilibres chimiques, ce qui est difficile en particulier pour le métaborate de sodium. De plus, il y a un risque d'introduire des incertitudes supplémentaires qui peuvent conduire à des valeurs fausses de pH calculées, voire à des difficultés dans la résolution du calcul numérique et à l'arrêt du calcul. Dans certains cas (cas où le modèle de réservoir a un grand nombre de mailles, ou bien lorsque les équilibres chimiques mettant en jeu l'agent alcalin et permettant de calculer la concentration en OH- ne sont pas tous connus) le calcul de la quantité d'agent alcalin à injecter pour éviter la rétention du tensio-actif n'est pas possible. On ne peut pas prévoir la récupération d'huile dans le procédé qui devient impossible à appliquer.

L'objet de l'invention concerne un procédé pour modéliser l'évolution du pH d'un milieu poreux suite à l'injection d'une solution d'agent alcalin dans ce milieu, sans appliquer le système d'équations relatif aux relations d'équilibre pour le transport de l'agent alcalin tampon. Selon ce procédé de modélisation du pH, on considère l'agent alcalin comme un pseudo-constituant soude, de concentration égale à la concentration de OH- correspondant au pH de la solution d'agent alcalin injectée. Puis, on utilise les outils de modélisation propres au composé soude. Le procédé selon l'invention permet de calculer la quantité d'agent alcalin à injecter pour obtenir un pH basique dans le cas d'un modèle à l'échelle du réservoir.

Bazin et al, SPEReservoir Engineering, May 1991, pages 233-238, ne divulgue ni ne pointe vers une modélisation de l'évolution du pH en utilisant un simulateur de transport de soude, et en considérant l'agent alcalin comme un pseudo-constituant soude. r.

**La méthode selon l'invention**

De façon générale, l'invention concerne un procédé pour modéliser l'évolution du pH d'un milieu poreux suite à l'injection d'une solution d'agent alcalin dans ledit milieu, au moyen d'un simulateur d'écoulement modélisant un transport de soude à travers un milieu poreux, caractérisé en ce que :

- on considère l'agent alcalin comme un pseudo-constituant soude, de concentration égale à une concentration de OH- correspondant au pH de ladite solution d'agent alcalin injectée ;
- on utilise une équation d'adsorption calée sur des données expérimentales pour déterminer une quantité de pseudo-constituant soude adsorbée à partir de la concentration du pseudo-constituant soude ;
- on modélise l'évolution du pH en modélisant le transport de la solution d'agent alcalin au moyen dudit simulateur de transport de soude, en remplaçant la soude par le pseudo-constituant soude.

Selon l'invention, on peut réaliser le calage de l'équation d'adsorption en appliquant les étapes suivantes :

- on détermine un profil expérimental de pH, décrivant une évolution de pH en fonction d'un volume de solution injectée, en injectant ladite solution d'agent alcalin dans un échantillon dudit milieu, et en mesurant le pH des effluents sortant de l'échantillon ;
- on détermine un profil simulé de pH, en modélisant l'injection de solution d'agent alcalin dans l'échantillon au moyen dudit simulateur et de l'équation d'adsorption ;
- on modifie des paramètres de l'équation d'adsorption jusqu'à minimiser des différences entre ledit profil simulé et ledit profil expérimental.

Selon un mode particulier l'équation d'adsorption a la forme d'une isotherme de Langmuir portant sur une concentration en OH-. Elle peut s'écrire de la façon suivante:

$$C_r^{OH^-} = q_{max} \frac{k_e . C_w^{OH^-}}{1 + k_e . C_w^{OH^-}}$$

Avec:

$C_w^{OH^-}$ : quantité (concentration) du pseudo-constituant soude dans la solution

$C_r^{OH^-}$ : quantité (fraction massique) du pseudo-constituant soude adsorbée

$q_{max}$, $k_e$ : paramètres de l'équation d'adsorption à caler.

L'invention telle que revendiquée concerne donc un procédé de récupération assistée d'hydrocarbures contenus dans un milieu poreux souterrain, au moyen d'une technique de balayage du milieu par une solution aqueuse comportant au moins un produit chimique, dans lequel on introduit en sus une quantité d'agent alcalin, c'est à dire une base permettant d'obtenir un effet tampon, pour limiter l'adsorption dudit produit chimique. Selon ce procédé, on détermine la quantité d'agent alcalin à injecter en réalisant les étapes suivantes:

- on modélise une évolution du pH dans ledit milieu poreux suite à l'injection d'une quantité de solution d'agent alcalin dans ledit milieu, au moyen du procédé selon l'invention ;
- on réitère ladite modélisation de l'évolution du pH pour différentes quantités de solution d'agent alcalin injectée ;
- on choisit la quantité de solution d'agent alcalin à ajouter pour optimiser la récupération assistée d'hydrocarbures.

D'autres caractéristiques et avantages du procédé selon l'invention, apparaîtront à la lecture de la description ci-après d'exemples de réalisations, en se référant aux figures annexées et décrites ci-après.

**Présentation succincte des figures**

- la figure 1 montre les points expérimentaux de pH et la courbe de pH calculée par un modèle complexe prenant en compte les relations d'équilibre, "modèle agent alcalin tampon", pour l'injection de 1 VP de carbonate de sodium à 10 g/L suivie de 6.5 VP d'eau de chasse.
- la figure 2 montre les points expérimentaux de pH et la courbe de pH calculée par le "modèle soude" pour l'injection de 1 VP (Volume de Pore) de soude à 1 g /L suivie de 8 VP d'eau de chasse.
- la figure 3 présente de manière synthétique les étapes d'un mode de réalisation du procédé selon l'invention.
- La figure 4 illustre l'étape de détermination des paramètres de l'isotherme d'adsorption des pseudo-ions OH- pour une expérience d'injection de 1 VP de carbonate de sodium à 10 g/L suivie de 6.5 VP d'eau de chasse.
- la figure 5 montre la comparaison du "modèle pseudo-constituant soude" (MPS) en utilisant l'isotherme d'adsorption des pseudo ions OH-, et du "modèle agent alcalin tampon" pour une expérience d'injection de 1 VP de carbonate de sodium à 10 g/L suivie de 6.5 VP d'eau de chasse.
- La figure 6 illustre l'étape de détermination des paramètres de l'isotherme d'adsorption des pseudo-ions OH- pour une expérience d'injection de 1 VP de tétraborate de sodium à 10 g/L suivie de 7 VP d'eau de chasse

**Description détaillée du procédé**

Le procédé selon l'invention est un procédé de récupération assistée d'hydrocarbures contenus dans un milieu poreux souterrain, au moyen d'une technique de balayage du milieu par une solution aqueuse comportant au moins un produits chimiques (tension actif,...), dans lequel on introduit en sus une quantité d'agent alcalin pour obtenir un pH basique et ainsi limiter l'adsorption du produit chimique. Dans le cadre de l'invention revendiquée, l'agent alcalin est une base permettant d'obtenir un effet tampon. L'invention se base sur un procédé permettant de modéliser l'évolution du pH d'un milieu poreux suite à l'injection d'une solution d'agent alcalin dans ce milieu, au moyen d'un simulateur d'écoulement modélisant le transport de soude à travers un milieu poreux.

Selon ce procédé de modélisation du pH, on considère l'agent alcalin comme un pseudo-constituant soude, de concentration égale à la concentration de OH- correspondant au pH de la solution d'agent alcalin injectée. Puis, on utilise les outils de modélisation propres au composé soude.

Les outils permettant de modéliser l'évolution du pH suite à une injection de soude sont décrits ci-après.

Pour modéliser le transport, on utilise un simulateur d'écoulement modélisant le transport de soude en milieu poreux à différentes échelles. Un exemple d'outil de modélisation est le logiciel PumaFlow (IFP Energies nouvelles, France). Les équations de l'huile et de l'eau sont de type "black oil". Il faut ajouter à ces équations "black oil" des équations de transport de chaque espèce chimique dans la phase eau. On écrit l'équation de conservation des espèces chimiques dans la phase eau de la façon suivante :

$$\frac{\partial m_k}{\partial t} + div(\rho_w C_w^k \vec{u}_w + \vec{J}_w^k) + C_w^k Q_w = 0 \qquad (1)$$

Avec:

$$m_k = \phi \rho_w S_w C_w^k + (1-\phi)\rho_r C_r^k \qquad (2)$$

$$\vec{u}_w = -\frac{kk_{rw}}{\mu_w R_m}(\overrightarrow{grad P_w} + \vec{g}) \qquad (3)$$

$\phi$ :   porosité,

$k$ :   perméabilité absolue du milieu poreux,

$k_{rw}$ :   perméabilité relative de la phase eau,

$P_w$ :   pression dans la phase eau,

$g$ :   accélération de la pesanteur

$S_w$ :   saturation en eau (w),

$\rho_w$ :   masse volumique de l'eau,

$\mu_w$ :   viscosité de l'eau sans polymère

$\vec{u}_w$ :   vitesse de la phase eau,

$Q_w$ :   débit d'injection / production de l'eau,

$m_k$ :   masse totale du composant k,

$C_w^k$ :   fraction massique du composant k dans la phase w (eau),

$C_r^k$ :   fraction massique du composant k adsorbé sur la roche,

$\rho_r$ :   masse volumique de la roche,

$\vec{u}_w$ :   flux de diffusion-dispersion du composant k dans la phase w où l'indice k désigne l'espèce chimique : tensio-actif, agent alcalin et polymère.

Pour calculer l'évolution du pH du milieu suite à l'injection de soude, on utilise un "modèle soude" : le système d'équations précédent permet de calculer le transport de la soude à partir du moment où on définit la fraction massique de soude adsorbée. La fraction massique de soude adsorbée suit une isotherme de Langmuir portant sur la concentration de OH- :

$$C_r^{OH^-} = q_{max} \frac{k_e.C_w^{OH^-}}{1 + k_e.C_w^{OH^-}} \qquad (5)$$

On détermine ensuite le pH à partir de la concentration de OH⁻ suivant la relation :

$$pH = pKe + \log(C_w^{OH^-}) \qquad (4)$$

La figure 2 illustre le pH mesuré (points) dans les effluents lors d'une expérience-type d'injection de soude en fonction du volume d'injection : 1 VP (Volume de Pore) de soude à 1 g/L suivie de 8 VP d'eau de chasse. La courbe calculée à partir du "modèle soude" est représentée en trait plein. Cette expérience a été effectuée en suivant les étapes suivantes: i) saturation par de la saumure à 10 g/L NaCl d'une carotte de grès; ii) injection d'un volume de 10.8 mL, correspondant à 1 fois le volume de pore de la carotte (1 VP) de solution de soude à 1 g/L dans de la saumure à 10 g/L NaCl; iii) injection de 81.6 mL (8 VP) de saumure à 10 g/L NaCl (dite "eau de chasse"). On observe que la courbe simulée (trait plein sur la figure 1) rend compte de manière très satisfaisante des résultats expérimentaux.

Selon l'invention, à partir de ce "modèle soude", c'est-à-dire le simulateur d'écoulement modélisant le transport de soude et l'équation d'adsorption des ions OH-, on réalise la simulation numérique de l'injection d'agent alcalin dans le milieu poreux.

Pour ce faire, on considère l'agent alcalin comme un pseudo-constituant soude, de concentration égale à la concentration de OH- correspondant au pH de la solution d'agent alcalin injectée.

On calcule donc le pH de la solution d'agent alcalin injecté dans le milieu poreux, et on en déduit la concentration en ions OH-. On établit la correspondance entre concentration de soude et concentration d'agent alcalin tampon par calcul à partir des constantes d'équilibre thermodynamique, ou à partir de valeurs de pH mesurées expérimentalement pour des solutions à concentration connue de l'agent alcalin tampon.

Puis, pour pouvoir utiliser le simulateur d'écoulement modélisant le transport de soude, avec comme valeur de concentration en ions OH- celle précédemment calculée ou mesurée, on utilise une équation d'adsorption de ces ions pseudo-constituant soude. Cette équation permet de déterminer la quantité de pseudo-constituant soude adsorbée à partir de la concentration du pseudo-constituant soude.

Pour ce faire on utilise l'équation d'adsorption du modèle soude (équation 5), que l'on cale sur des données expérimentales. L'équation d'adsorption s'écrit donc :

$$C_r^{OH^-} = q_{max} \frac{k_e.C_w^{OH^-}}{1 + k_e.C_w^{OH^-}}$$

Avec:

$C_w^{OH^-}$ :     quantité (concentration) du pseudo-constituant soude dans la solution

$C_r^{OH^-}$ :     quantité (fraction massique) du pseudo-constituant soude adsorbée

$q_{max}, k_e$ :     paramètres de l'équation d'adsorption à caler.Ce modèle est appelé modèle "pseudo-constituant soude".

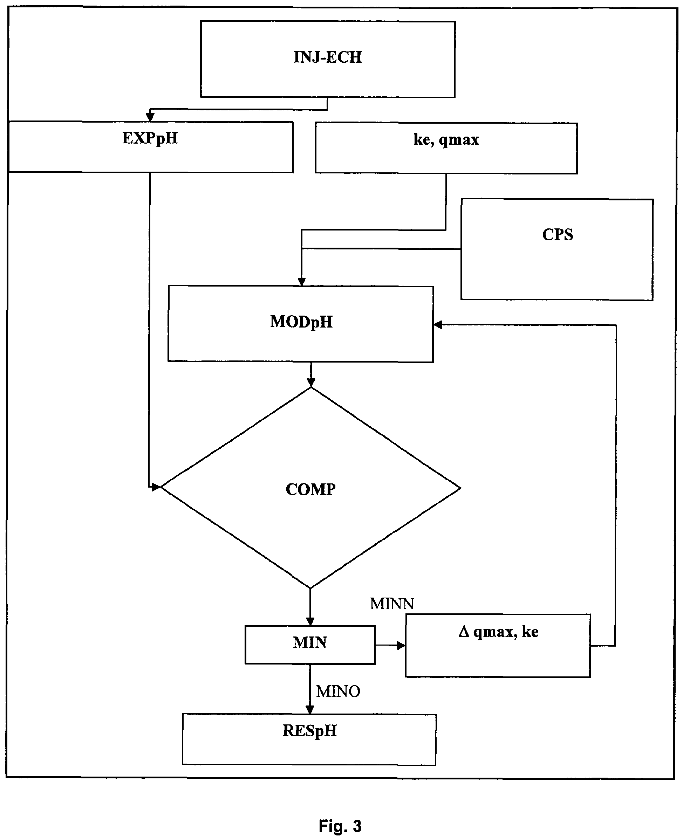

Selon un mode de réalisation, le calage peut s'effectuer en utilisant les étapes suivantes (figure 3) :

- Détermination d'un profil de pH expérimental : expérience d'injection de l'agent alcalin dans un échantillon
- Modélisation du profil de pH expérimental : résolution de l'équation de transport de l'agent alcalin et utilisation d'une équation d'adsorption

1. Détermination d'un profil de pH expérimental (EXPpH) : expérience d'iniection de l'agent alcalin dans un échantillon

Au cours de cette étape, on détermine un profil expérimental de pH, décrivant l'évolution de pH en fonction du volume de solution injectée, en injectant la solution d'agent alcalin dans un échantillon du milieu, et en mesurant le pH des effluents sortant de l'échantillon.

Les données expérimentales sont d'une importance primordiale pour optimiser les injections de produits chimiques tensio-actif et alcalin dans les opérations de récupération améliorée par injection d'additifs chimiques. Parmi ces données, l'isotherme d'adsorption de l'agent alcalin est capitale.

L'expérience est réalisée à la température du réservoir. On place un échantillon de la roche réservoir dans une cellule porte échantillon qui peut recevoir des carottes d'un diamètre de 5 cm et d'une longueur de 10 cm. En vue de reproduire le processus dynamique opérant dans le réservoir, les essais de laboratoire sont réalisés dans des conditions de réservoir représentatives (température, pression, carottes saturées en eau de composition identique à l'eau en place dans le réservoir). On sature la carotte avec une eau de composition identique à l'eau en place dans le réservoir (appelée ci-après eau en place).

On prépare la solution de l'agent alcalin a une concentration C (qui sera exprimée ci-après en g/L) en dissolvant une masse donnée de produit dans un volume donné d'eau salée de composition identique à l'eau qui est utilisée pour l'injection des additifs chimiques dans le réservoir (appelée ci-après eau d'injection).

La solution de l'agent alcalin tampon est injectée (INJ-ECH) à débit constant. D'une manière générale on injecte un volume de pore de la solution d'agent alcalin tampon. Puis on injecte une quantité de 10 PV maximum d'eau d'injection.

L'effluent est collecté à la sortie de la carotte dans des tubes. Le pH est mesuré dans chaque tube. La valeur du pH est reportée en fonction du temps exprimé en volumes de pores injectés.

On obtient ainsi une courbe exprimant le pH des effluents (fluides sortant de l'échantillon) en fonction du volume de la solution de l'agent alcalin injecté à travers l'échantillon.

<u>2. Modélisation du profil de pH expérimental (MODpH) : résolution de l'équation de transport de l'agent alcalin et utilisation d'une équation d'adsorption</u>

Au cours de cette étape, on détermine un profil simulé de pH, en modélisant l'injection de solution d'agent alcalin dans l'échantillon (l'expérience de laboratoire (étape 1)) et en déterminant le pH des effluents correspondants, au moyen du modèle "pseudo-constituant soude" (simulateur et équation d'adsorption).

On calcule donc le pH de la solution d'agent alcalin injecté dans l'échantillon (étape 1), et on en déduit la concentration en ions OH-. On établit la correspondance entre concentration de soude et concentration d'agent alcalin tampon par calcul à partir de valeurs de pH mesurées expérimentalement pour des solutions à concentration connue de l'agent alcalin tampon.

Puis, on utilise l'équation d'adsorption du pseudo-constituant soude, pour déterminer la quantité de pseudo-constituant soude adsorbée à partir de la concentration du pseudo-constituant soude (CPS). Cette équation est l'équation d'adsorption du modèle soude (équation 5), initialisé avec des valeurs $q_{max}$ et $k_e$ choisies. Ces paramètres sont ensuite modifiés.

<u>3. Calage de l'équation d'adsorption</u>

On réalise le calage de l'équation d'adsorption en modifiant les paramètres $q_{max}$ et $k_e$ de l'équation d'adsorption jusqu'à minimiser (MIN) les différences entre le profil simulé (étape 2) et le profil expérimental (étape 1). On compare (COMP) donc le profil de pH expérimental (EXPpH) et le profile modélisé (MODpH). Si la minimisation est acceptable (MINO) on arrête le calage et l'on calcule le pH à l'échelle du réservoir (RESpH), si la minimisation n'est pas acceptable (MINN) on réitère en modifiant (Δ) les paramètres $q_{max}$ et $k_e$.

Le modèle est initialisé à pH=7. On effectue ensuite plusieurs simulations (étape 2) pour caler la courbe expérimentale du pH dans les effluents en modifiant les deux paramètres $q_{max}$ et $k_e$ de l'isotherme d'adsorption des pseudo-ions OH⁻. Les paramètres de l'isotherme de Langmuir sont ainsi obtenus par essais et erreurs sur le profil de pH expérimental. Cette démarche est présentée de manière synthétique dans la figure 3.

A l'issue de cette étape on obtient un modèle de transport pour l'agent alcalin basé sur le modèle soude. Ce modèle correspond au modèle soude dans lequel la concentration en ion OH- est remplacée par la concentration en pseudo-constituant soude, et dans lequel les paramètres $q_{max}$ et $k_e$ de l'isotherme d'adsorption des ions OH- ont été calés sur les données expérimentales de façon à fournir une isotherme d'adsorption des pseudo-constituants soude.

On peut alors, modéliser l'évolution du pH suite à l'injection d'agent alcalin à l'échelle du réservoir, en modélisant le transport de la solution d'agent alcalin au moyen du simulateur de transport de soude, en remplaçant la soude par le pseudo-constituant soude.

La simulation permet aux ingénieurs de réservoir de définir le meilleur schéma d'exploitation du gisement en injectant les quantités d'agent alcalin suffisantes pour éviter la rétention du tensio-actif. Elle permet ainsi de mieux dimensionner le procédé de récupération d'huile par additifs chimiques et de maximiser la production de l'huile.

**Exemples de mise en œuvre**

Deux exemples illustrent les capacités du procédé selon l'invention : le premier concerne la détermination des paramètres pour une injection de carbonate de sodium et le deuxième exemple, la détermination des paramètres pour une injection de tétraborate de sodium.

Les conditions de chacune des deux expériences d'injection sont détaillées dans le tableau 1.

*Tableau 1. - Expériences d'injection de carbonate de sodium et de tétraborate de sodium : propriétés des carottes utilisées et principaux paramètres expérimentaux.*

|  | injection de carbonate de sodium | injection de tétraborate de sodium |
|---|---|---|
| **Nature du milieu poreux** | Massif granulaire synthétique 95% silice et 5% kaolinite (en masse) | Massif granulaire synthétique 95% silice et 5% kaolinite (en masse) |
| **Diamètre** | 2 cm | 2 cm |
| **Longueur** | 7 cm | 7 cm |
| **Porosité** | 25% | 25% |
| **Saumure de saturation** | NaCl 10 g/L | NaCl 10 g/L |
| **Concentration de l'agent alcalin tampon injecté** | 10 g/L | 10 g/L |
| **pH de la solution injectée** | 11.4 | 9.5 |
| **Volume de solution tampon injecté** | 1 VP | 1 VP |
| **Volume d'eau de chasse injectée** | 6.5 VP | 7 VP |
| **Vitesse d'injection** | 30 cm/jour | 30 cm/jour |

Exemple 1- Détermination des paramètres pour une injection de carbonate de sodium.

La carotte (massif granulaire synthétique constitué en masse à 95% de silice et à 5% de kaolinite) est initialement saturée par de la saumure à 10 g/L NaCl. Un volume de 5.5 mL de solution de carbonate de sodium préparée dans la même saumure à 10 g/L NaCl est ensuite injecté. Ce volume correspond 1 VP. Après l'injection de cette solution tampon, un volume de 35.7 mL, soit 6.5 VP, de saumure à 10 g/L NaCl (dite "eau de chasse") est ensuite injecté.

La concentration de carbonate de sodium vaut 10 g/L et le pH de cette solution est égal à 11.4. La concentration correspondante en ions $OH^-$ peut être déterminée graphiquement à partir d'abaques connues, analytiquement à partir de la résolution des équations d'équilibres chimiques mis en jeu pour les solutions de carbonate de sodium, ou bien directement à partir de la connaissance du pH de la solution injectée. Dans le cas de l'expérience présentée, puisque le pH injecté vaut 11.4, la concentration en ions $OH^-$ à utiliser pour la simulation avec le "modèle pseudo-constituant soude" est de $5.5 \times 10^{-3}$ mol/L. Dans les simulations numériques, les mêmes séquences d'injection que dans l'expérience sont effectuées. On injecte en particulier le même volume d'agent alcalin que dans l'expérience (soit 1 VP de soude). Toutefois, le volume d'eau de chasse est fixé à 9 VP.

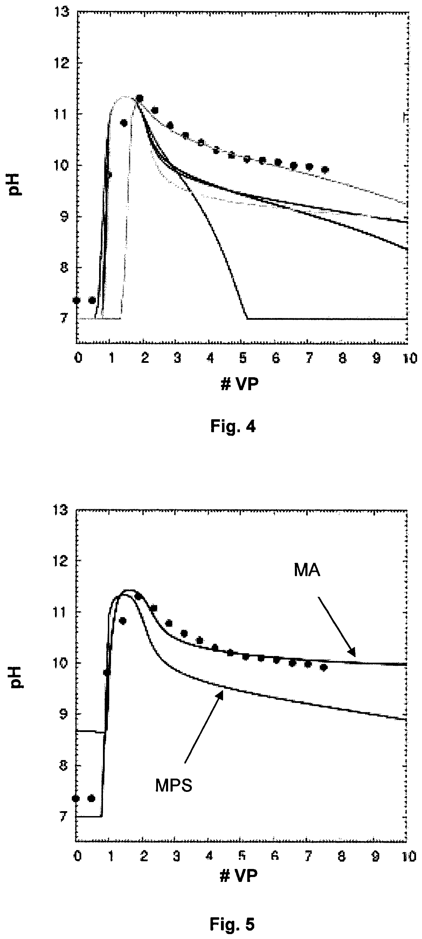

Sur la figure 4 sont présentés les résultats expérimentaux (points) et les résultats numériques (courbes) correspondant aux valeurs de pH en fonction du volume total de liquide injecté. Pour illustrer la méthode de calage mise en œuvre, plusieurs courbes sont présentées : chaque courbe correspond au résultat d'une simulation, effectuée avec un couple de valeurs $q_{max}$ et $k_e$. Le calage finalement retenu est la simulation effectuée avec $q_{max}$ = 1.8 µg/g et $k_e$ = 900 L/g. Il privilégie le bon ajustement de la percée de l'augmentation de pH. Ceci se justifie par le fait que les simulations à l'échelle réservoir impliquent des volumes d'agents chimique injectés toujours inférieurs à 1 VP et des volumes d'eau de chasse de l'ordre d'1 VP au maximum. Lorsque le calage de la percée est correct, on observe que valeurs de pH simulées diminuent plus vite que les pH expérimentaux. Ceci s'explique par l'absence d'effet tampon lors de l'injection de soude seule.

Une comparaison entre la simulation de la même expérience d'injection de carbonate de sodium avec le "modèle pseudo-composant soude" (MPS) et avec le "modèle agent alcalin tampon" (MA) ($q_{max}$ = 1.8 µg/g et $k_e$ = 900 L/g) est donnée sur la figure 5. On observe que, si l'on ne tient pas compte des valeurs initiales de pH, les deux simulations reproduisent les résultats expérimentaux de manière satisfaisante jusqu'à environ 2 VP injectés, ce qui est essentiel pour la simulation de cas réels.

Exemple 2- Détermination des paramètres pour une injection de tétraborate de sodium.

Dans le cas de l'injection de solutions d'agents alcalins tampons complexes ou présentant plusieurs constituants, le procédé selon l'invention peut s'avérer être le seul moyen de simuler l'effet de l'alcalin sur le pH. L'expérience présentée à titre d'exemple non limitatif concerne l'injection d'une solution de tétraborate de soude à 10 g/L, de pH 9.5. Les autres conditions de cette expérience, présentées dans le tableau 1, sont identiques à celles de l'expérience d'injection de carbonate de sodium, à l'exception du volume d'eau de chasse, qui est de 7 VP dans le cas du tétraborate.

La concentration correspondante en ions OH⁻ peut être déterminée graphiquement à partir d'abaques connues, ou bien directement à partir de la connaissance du pH de la solution injectée. Dans le cas de l'expérience présentée, puisque le pH injecté vaut 9.5, la concentration en ions OH⁻ à utiliser pour la simulation est de $7.9 \times 10^{-5}$ mol/L. Dans les simulations numériques, les mêmes séquences d'injection que dans l'expérience sont effectuées. On injecte en particulier le même volume d'agent alcalin que dans l'expérience (soit 1 VP de soude). Toutefois, comme précédemment, le volume d'eau de chasse est fixé à 9 VP.

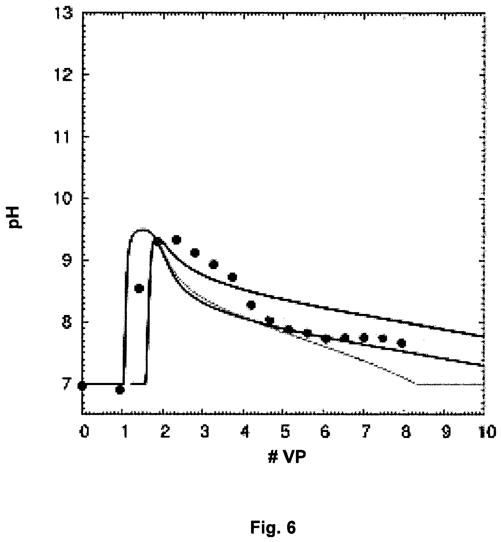

Sur la figure 6 sont présentés les résultats expérimentaux (points) et les résultats numériques (courbes) correspondant aux valeurs de pH en fonction du volume total de liquide injecté. Pour illustrer la méthode de calage mise en œuvre, plusieurs courbes sont présentées: chaque courbe correspond au résultat d'une simulation, effectuée avec un couple de valeurs $q_{max}$ et $k_e$. Le calage finalement retenu est la simulation effectuée avec $q_{max}$ = 0.075 $\mu$g/g et $k_e$ = 30000 L/g. Comme pour l'injection de carbonate de sodium, et pour les mêmes raisons, il privilégie le bon ajustement de la percée de l'augmentation de pH. On observe également que le décalage entre simulation et expérience lors de la diminution du pH est moins marqué que dans le cas de l'expérience d'injection de carbonate de sodium. Ceci s'explique par le fait que les valeurs de pH atteintes sont plus faibles, l'absence d'effet tampon dû à l'injection de soude seule est ainsi moins sensible.

## Utilisations

L'invention concerne également un procédé de récupération assistée d'hydrocarbures contenus dans un milieu poreux souterrain, au moyen d'une technique de balayage du milieu par une solution aqueuse comportant au moins un produit chimique (tensio-actif par exemple), dans lequel on introduit en sus une quantité d'agent alcalin pour limiter l'adsorption de ce produit chimique.

Dimensionner ces injections de produits de conditionnement et améliorants passe par des calculs sur une représentation du réservoir (appelé modèle de réservoir) discrétisé sous formes d'unités de volume élémentaires (mailles), et dans lequel on résout l'équation de transport des espèces en présence (eau et phases hydrocarbures: huile et/ou gaz), le transport et le devenir des espèces chimiques (passage ou maintien en solution, précipitation, adsorption, transformation en d'autres espèces chimiques). Ces calculs sont réalisés pour déterminer les quantités de produit perdues au sein du réservoir et la récupération d'huile aux puits producteurs.

Selon ce procédé, on détermine la quantité d'agent alcalin à injecter en réalisant les étapes suivantes:

- on modélise l'évolution du pH dans le milieu poreux suite à l'injection d'une quantité de solution d'agent alcalin dans ce milieu, au moyen du procédé selon l'invention ;

- on réitère la modélisation de l'évolution du pH pour différentes quantités de solution d'agent alcalin injectée ;

- on choisit la quantité de solution d'agent alcalin injectée provoquant une baisse d'adsorption du produit chimique permettant un balayage optimal du milieu.

Ce volume est en fait un compromis entre le coût et les performances techniques. En effet, plus l'on injecte d'agent alcalin, plus l'adsorption sera limitée. Mais plus la quantité injectée est importante plus le coût augmente. Il est donc nécessaire de déterminer le volume minimal à injecter pour obtenir une baisse d'adsorption suffisante, c'est-à-dire entrainant un balayage suffisant du milieu pour que son exploitation soit rentable. En effet, si les quantités de tensio-actifs retenues par la roche par adsorption sont importantes, l'efficacité de la formulation devient très faible et la quantité d'huile récupérée devient trop faible pour rendre le procédé économique.

## Revendications

1. Procédé de récupération assistée d'hydrocarbures contenus dans un milieu poreux souterrain, au moyen d'une technique de balayage du milieu par une solution aqueuse comportant au moins un produit chimique destiné à améliorer le balayage dudit milieu, dans lequel on introduit en sus une quantité d'agent alcalin pour limiter l'adsorption dudit produit chimique, **caractérisé en ce que** l'on détermine la quantité d'agent alcalin à injecter en réalisant les étapes suivantes:

A) on modélise une évolution du pH dans ledit milieu poreux suite à l'injection d'une quantité de solution d'agent alcalin dans ledit milieu, ledit agent alcalin étant une base permettant d'obtenir un effet tampon, au moyen d'un simulateur d'écoulement modélisant un transport de soude à travers ledit milieu poreux, en réalisant les étapes suivantes:

- on considère l'agent alcalin comme un pseudo-constituant soude, de concentration égale à une concentration de OH- correspondant au pH de ladite solution d'agent alcalin injectée ;
- on utilise une équation d'adsorption des ions OH-, dépendant de paramètres à caler, cette équation étant calée sur des données expérimentales pour déterminer une quantité de pseudo-constituant soude adsorbée à partir de la concentration du pseudo-constituant soude ;
- on modélise l'évolution du pH en modélisant le transport de la solution d'agent alcalin au moyen dudit simulateur de transport de soude, en remplaçant la soude par le pseudo-constituant soude;

B) on réitère ladite modélisation de l'évolution du pH pour différentes quantités de solution d'agent alcalin injectée ;

C) on choisit la quantité de solution d'agent alcalin à ajouter pour optimiser la récupération assistée d'hydrocarbures.

2. Procédé selon la revendication 1, dans lequel on réalise le calage de l'équation d'adsorption en appliquant les étapes suivantes :

- on détermine un profil expérimental de pH, décrivant une évolution de pH en fonction d'un volume de solution injectée, en injectant ladite solution d'agent alcalin dans un échantillon dudit milieu, et en mesurant le pH des effluents sortant de l'échantillon ;
- on détermine un profil simulé de pH, en modélisant l'injection de solution d'agent alcalin dans l'échantillon au moyen dudit simulateur et de l'équation d'adsorption ;
- on modifie des paramètres de l'équation d'adsorption jusqu'à minimiser des différences entre ledit profil simulé et ledit profil expérimental.

3. Procédé selon l'une des revendications précédentes, dans lequel l'équation d'adsorption a la forme d'une isotherme de Langmuir portant sur une concentration en OH-.

4. Procédé selon la revendication 3, dans lequel l'équation d'adsorption s'écrit:

$$C_r^{OH^-} = q_{max} \frac{k_e.C_w^{OH^-}}{1 + k_e.C_w^{OH^-}}$$

Avec :

$C_w^{OH^-}$ : quantité, concentration, du pseudo-constituant soude dans la solution

$C_r^{OH^-}$ : quantité, fraction massique, du pseudo-constituant soude adsorbée

$q_{max}$, $k_e$ : paramètres de l'équation d'adsorption à caler.

**Patentansprüche**

1. Verfahren zur Stimulation der Gewinnung von Kohlenwasserstoffen, die in einem unterirdischen porösen Milieu enthalten sind, mit Hilfe einer Scantechnik des Milieus durch eine wässrige Lösung, umfassend mindestens ein chemisches Produkt, das dazu bestimmt ist, das Scannen des Milieus zu verbessern, in das zusätzlich eine Menge eines alkalischen Wirkstoffes eingeleitet wird, um die Adsorption des chemischen Produkts zu begrenzen, **dadurch gekennzeichnet, dass** die Menge des einzuleitenden alkalischen Wirkstoffes unter Durchführung der folgenden Schritte bestimmt wird:

A) Modellieren einer Entwicklung des pH-Werts in dem porösen Milieu nach dem Einleiten einer Menge einer Lösung eines alkalischen Wirkstoffes in das Milieu, wobei der alkalische Wirkstoff eine Base ist, die es ermöglicht, einen Puffereffekt zu erzielen, mit Hilfe eines Fließsimulators, der einen Transport von Natronlauge durch das poröse Milieu modelliert, wobei die folgenden Schritte durchgeführt werden:

- Annahme des alkalischen Wirkstoffes als einen Pseudo-Bestandteil von Natronlauge mit einer Konzentration gleich einer Konzentration von OH- entsprechend dem pH-Wert der eingeleiteten Lösung des alkalischen Wirkstoffes;
- Verwendung einer Adsorptionsgleichung der OH- Ionen in Abhängigkeit von zu regelnden Parametern, wobei diese Gleichung auf experimentelle Daten geregelt ist, um eine absorbierte Menge eines Pseudo-Bestandteils von Natronlauge auf Basis der Konzentration des Pseudo-Bestandteils von Natronlauge zu bestimmen;
- Modellierung der Entwicklung des pH-Werts durch Modellierung des Transports der Lösung eines alkalischen Wirkstoffes mit Hilfe eines Transportsimulators von Natronlauge, wobei die Natronlauge durch den Pseudo-Bestandteil von Natronlauge ersetzt wird;

B) Reiterieren der Modellierung der Entwicklung des pH-Werts für verschiedene Mengen einer eingeleiteten Lösung eines alkalischen Wirkstoffes;
C) Auswählen einer hinzuzufügenden Menge der Lösung eines alkalischen Wirkstoffes, um die Stimulation der Gewinnung von Kohlenwasserstoffen zu optimieren.

2. Verfahren nach Anspruch 1, bei dem die Regelung der Adsorptionsgleichen unter Anwendung der folgenden Schritte durchgeführt wird:

- Bestimmen eines experimentellen pH-Profils, das eine pH-Entwicklung in Abhängigkeit von einem Volumen einer eingeleiteten Lösung beschreibt, wobei die Lösung eines alkalischen Wirkstoffes in eine Probe des Milieus eingeleitet wird, und der pH-Wert der aus der Probe austretenden Abflüsse gemessen wird;
- Bestimmen eines simulierten pH-Profils, wobei die Einleitung einer Lösung eines alkalischen Wirkstoffes in die Probe mit Hilfe des Simulators und der Adsorptionsgleichung modelliert wird;
- Verändern der Parameter der Adsorptionsgleichung, bis Unterschiede zwischen dem simulierten Profil und dem experimentellen Profil minimiert sind.

3. Verfahren nach einem der vorhergehenden Ansprüche, bei dem die Adsorptionsgleichung die Form einer Langmoir-Isotherme hat, die sich auf eine Konzentration an OHbezieht.

4. Verfahren nach Anspruch 3, bei dem die Adsorptionsgleichung folgendermaßen lautet:

$$C_r^{OH^-} = q_{max} \frac{k_e . C_w^{OH^-}}{1 + k_e . C_w^{OH^-}}$$

Wobei:

$C_w^{OH^-}$: Menge, Konzentration des Pseudo-Bestandteils von Natronlauge in der Lösung
$C_r^{OH^-}$: adsorbierte Menge, Massenanteil des Pseudo-Bestandteils von Natronlauge
$q_{max}$, $k_e$: Parameter der zu regelnden Adsorptionsgleichung.

**Claims**

1. Method for enhanced recovery of hydrocarbons contained in an underground porous medium, by means of a technique of flushing the medium with an aqueous solution comprising at least one chemical intended to improve the flushing of said medium, in which an amount of alkaline agent is additionally introduced to limit the adsorption of said chemical, **characterized in that** the amount of alkaline agent to be injected is determined by carrying out the following steps:

A) modelling a change in the pH in said porous medium following the injection of an amount of alkaline agent solution into said medium, said alkaline agent being a base that makes it possible to obtain a buffer effect, using a flow simulator that models a transport of sodium hydroxide through said porous medium, by carrying out the following steps:

- considering the alkaline agent to be a pseudo-sodium hydroxide constituent, having a concentration equal to an OH⁻ concentration corresponding to the pH of said alkaline agent solution injected;
- using an equation for adsorption of the OH⁻ ions, dependent on parameters to be calibrated, this equation being calibrated on experimental data in order to determine an amount of pseudo-sodium hydroxide constituent adsorbed from the concentration of the pseudo-sodium hydroxide constituent;
- modelling the change in the pH by modelling the transport of the alkaline agent solution using said sodium hydroxide transport simulator, replacing the sodium hydroxide with the pseudo-sodium hydroxide constituent;

B) repeating said modelling of the change in the pH for various amounts of alkaline agent solution injected;
C) choosing the amount of alkaline agent solution to be added in order to optimize the enhanced recovery of hydrocarbons.

2. Process according to Claim 1, in which the calibration of the adsorption equation is carried out by applying the following steps:

- determining an experimental pH profile, describing a change in pH as a function of a volume of solution injected, by injected said alkaline agent solution into a sample of said medium, and by measuring the pH of the effluents leaving the sample;
- determining a simulated pH profile, by modelling the injection of alkaline agent solution into the sample using said simulator and the adsorption equation;
- modifying parameters of the adsorption equation until differences between said simulated profile and said experimental profile are minimized.

3. Process according to either of the preceding claims, in which the adsorption equation has the form of a Langmuir isotherm relating to an OH⁻ concentration.

4. Process according to Claim 3, in which the adsorption equation is written:

$$C_r^{OH^-} = q_{\max} \frac{k_e . C_w^{OH^-}}{1 + k_e . C_w^{OH^-}}$$

with:

$C_w^{OH^-}$ : amount, concentration, of the pseudo-sodium hydroxide constituent in the solution

$C_r^{OH^-}$ : amount, mass fraction, of the pseudo-sodium hydroxide constituent adsorbed

$q_{max}$, $k_e$: parameters of the adsorption equation to be calibrated.

**Fig. 1**

**Fig. 2**

**Fig. 3**

Fig. 4

Fig. 5

**Fig. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description

- **BAZIN et al.** *SPEReservoir Engineering,* Mai 1991, 233-238